Europäisches Patentamt

(19) European Patent Office

Office européen des brevets

(11) Publication number: **0 165 750**
**A2**

## (12) EUROPEAN PATENT APPLICATION

(21) Application number: 85304074.9

(22) Date of filing: **10.06.85**

(51) Int. Cl.⁴: **B 29 C 43/46**
**B 29 C 59/04**
**//B29L7:00**

(30) Priority: **12.06.84 DE 3421800**

(43) Date of publication of application:
**27.12.85 Bulletin 85/52**

(84) Designated Contracting States:
**AT BE CH FR GB IT LI LU NL SE**

(71) Applicant: MASCHINEN UND WERKZEUGBAU
MICHAEL BRÜMMER GmbH
Sinbronn 62
D-8804 Dinkelsbühl(DE)

(72) Inventor: Lechler, Helmut
Sinbronn 48a
D-8804 Dinkelsbühl(DE)

(72) Inventor: Brummer, Friedrich
Sinbronn 62
D-8804 Dinkelsbühl(DE)

(74) Representative: Sommerville, John Henry et al,
SOMMERVILLE & RUSHTON 11 Holywell Hill.
St. Albans Hertfordshire, AL1 1EZ(GB)

(54) Elastic roll for treating thermoplastic film.

(57) Such a roll is of the kind having a rigid central axis (2),
which is surrounded by a layer (5) of elastic material, over
which a tubular thin-walled smoothing shell (6) is drawn.

The object of the invention is to provide such a roll in
which the pressing force is largely uniform over the length of
the roll – seen in the axial direction – and can be adjusted to
different pressure values by simple measures.

The object is solved by the roll being provided with end
plates (10) having conical pressure surfaces (11) which are
mounted on the central axis for axial movement with respect
to each other, so that said surfaces are able to be pressed
against the ends of the elastic layer (5) via tightening nuts
(12) to adjust the pressing force of the smoothing shell (6).

FIG 1

## Elastic Roll for Treating Thermoplastic Film

The invention relates to an elastic roll for treating a product, in particular smoothing, the surface of a thermoplastic film, the roll being of the kind having a rigid central axis, which is surrounded by a layer of elastic material, over which a tubular thin-walled smoothing shell is drawn.

Such rolls have become known from German Patent Specification No. 12 51 188. Such rolls work with a counter roll, which is disposed parallel to the said elastic roll and which together with this forms a press. The shell surfaces of the two rolls form a gap through which the film to be treated runs.

According to the requirements which the film has to meet, a more or less strong pressure is needed. To change the pressing force different measures and devices have become known. For example, one of the two named rolls, e.g. the elastic roll, can be rigidly supported, and the counter roll can be pressed by force onto the bearing journal. However there is the danger of irregularities over the length of the roll. In particular the disadvantageous effect of the deflection of the roll is noticeable.

The object of the invention is to provide an elastic roll in which the pressing force is largely uniform over the length of the roll - seen in the axial direction - and can be adjusted to different pressure values by simple measures.

The object is solved by the characterising features set out in appended claim 1.

By tightening the adjusting nuts more or less strongly the end plates are correspondingly moved in the axial direction so that the smoothing shell is more or less expanded and consequently the pressure exerted by the roll is adjusted as required.

Rolls having conical clamping of the roll shell have become known from German Patent Specification No. 33 80 120. These conical clamping devices however do not serve to expand the roll shell, but serve another purpose, i.e. for centering and more simple assembly.

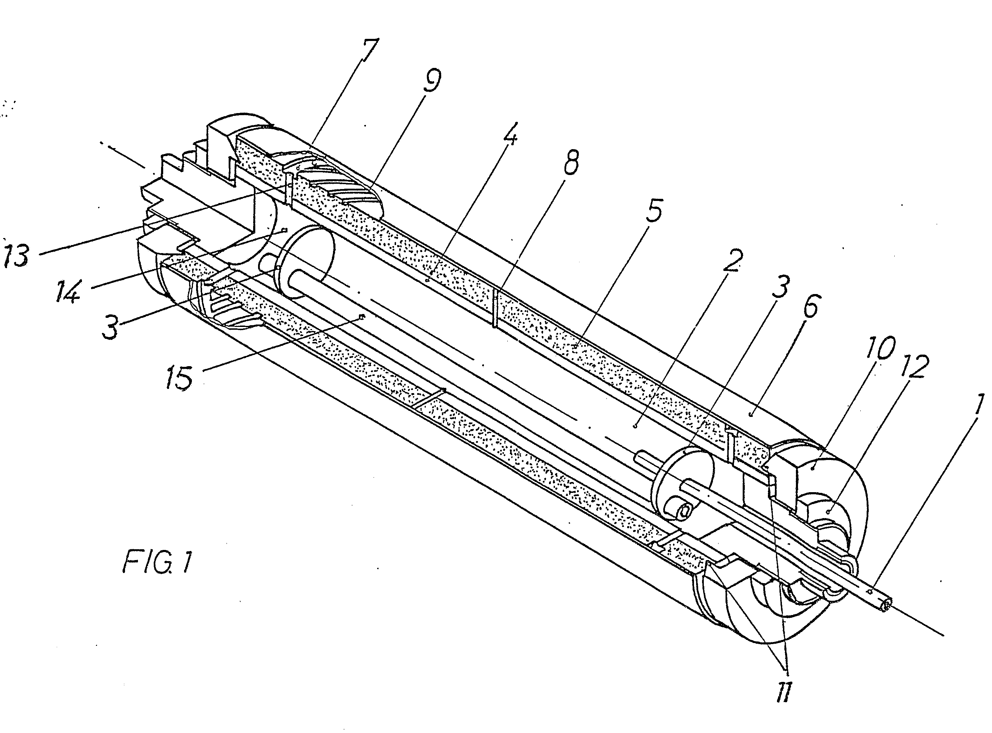

In order that the invention may be readily understood one preferred embodiment of elastic roll in accordance therewith will now be described with reference to the accompanying drawing (Figure 1), which is a perspective, part-section view of the roll.

Referring to Figure 1 the roll comprises a support tube 3 constituting said rigid central axis of the roll into one end of which a pipe 1 extends for feeding heat exchange medium to a central space 2, defined by the bore of said tube and end discs 3 spaced apart within said bore. Measured quantities of the heat exchange medium can be fed in to the space 2 via the pipe 1. An elastic layer 5 surrounds the tube 3, which layer has spiral grooves 9 formed in its outer surface. The grooves are arranged to be supplied with medium from the space 2 via radial ducts 8 extending through the layer and located more or less centrally of the roll. The smoothing shell 6 is located over the outer surface of the elastic layer 5 so that there is a direct contact with the cooling or heating medium, as required, fed to the grooves 9. For this reason the smoothing shell 6 can be both metallic and organic, e.g. carbon fibres with epoxy resin. Also a metallic or organic web of material can be used for the smoothing shell 6 where the latter has to perform the task of intensive cooling, or of an application roll. The medium supplied via the grooves 9 can then escape via pores in the smoothing shell 6 to contact the thermoplastic layer being treated.

To produce an elastic roll with an optimal surface pressure specific to the product, it is necessary to determine the volume and Shore hardness of the elastic layer 5, to determine the type of material for the smoothing shell 6 and also its thickness and hardness. A watertight connection of the smoothing shell 6 with the elastic layer 5 can be achieved by undercooling. Here there is a further possibility of influencing the surface pressure by choice of the external diameter of the elastic roll and the degree of undercooling.

In accordance with the invention, the surface pressure applied by the roll is mainly adjusted via end plates 10 by means of tightening nuts 12. The support tube 4 is not fixedly connected to the elastic layer 5 and the end plates have conical pressure surfaces 11 which act on the opposite ends of said layer to adjust the compressive stress in the latter, this stress being greater towards the inner diameter of the layer, i.e. towards the support tube 4. As the elastic layer may be compared with an incompressible fluid, the effect of tightening the nuts 12 is to expand the layer outwards towards the smoothing shell 6 and also towards the end plates 10, as in this latter direction the layer is able to yield because of the shape of the conical pressure surfaces 11. To prevent the radial ducts 8 being constricted when the layer 5 is compressed, they are equipped with reinforcing tubes. Discharge of the medium is via a circumferentially extending collecting channel 7 formed at one end of the elastic layer, a duct 13 extending from the channel and radially through said layer to a space 14 within the support tube 4 beyond the respective disc 3, the medium then being fed back to its source via a small diameter tube 15 extending through the space 2.

## Claims

1. An elastic roll for treating a product, in particular smoothing, the surface of a thermoplastic film, of the kind having a rigid central axis (2), which is surrounded by a layer (5) of elastic material over which a tubular, thin-walled smoothing shell (6) is drawn, characterised in that end plates (10) having conical pressure surfaces (11) are mounted on the central axis for axial movement with respect to each other, so that said surfaces are able to be pressed against the ends of the elastic layer (5) via tightening nuts (12) to adjust the pressing force of the smoothing shell (6).

2. An elastic roll according to Claim 1, characterised in that an optimal pressing force specific to the product to be treated is predetermined by the volume and Shore hardness of the elastic layer (5) and also by the type and thickness of material for the smoothing shell (6).

3. An elastic smoothing roll according to Claim 1 or 2, characterised in that the elastic layer has spiral grooves (9) formed in its outer surface through which a heat transfer medium is fed in from a space disposed substantially centrally of the central axis via ducts (8) through said layer.

4. An elastic smoothing roll according to Claim 3, characterised in that the smoothing shell (6) is porous, so that for intensive cooling, the cooling medium can reach the product being treated.

FIG 1

0165750